# EUROPEAN PATENT SPECIFICATION

(11) **EP 1 022 162 B1**
(45) Date of publication and mention of the grant of the patent: **23.04.2003**
(21) Application number: 99100920.0
(22) Date of filing: 20.01.1999
(51) Int. Cl.: B60C 3/00, B60C 9/18, B60C 17/00, B60C 9/22

(54) **Tire with improved run-flat design**
Reifen mit verbesserter Notlaufstruktur
Bandage pneumatique avec profil amélioré pour roulage à plat

(43) Date of publication of application: 26.07.2000
(73) Proprietor: THE GOODYEAR TIRE & RUBBER COMPANY, Akron, Ohio 44316-0001 (US)
(72) Inventor: Roesgen, Alain Emile Francois, 2175 Luxembourg (LU); Philpott, Frank, 5465 Waldbredimus (LU); Colantonio, Laurent, 6600 Bastogne (BE)
(74) Representative: Leitz, Paul

(56) References cited:
- EP-A- 0 729 853
- FR-A- 2 702 180
- US-A- 1 534 365
- US-A- 1 678 211
- US-A- 3 977 455
- US-A- 5 368 082

## Description

### Background of the Invention

This invention relates to a radial ply pneumatic tire of any usual aspect ratio specifically for, but not limited to, passenger cars and more particularly to a pneumatic tire capable of being used in the uninflated condition. The tire's structure is designed to improves ride performance of prior art run-flat tires without exhibiting the normal weight penalties associated with such tires.

Various tire constructions have been suggested for pneumatic run-flat tires, that is, tires capable of being used in the uninflated condition. One approach described in US-A- 4 111 249 entitled the "Banded Tire" was to provide a hoop or annular band directly under and approximately as wide as the tread. The hoop in combination with the rest of the tire structure could support the vehicle weight in the uninflated condition. This band tire actually tensioned the ply cords even in the uninflated condition.

Another approach taken has been to simply strengthen the sidewalls by increasing the cross-sectional thickness thereof. These tires when operated in the uninflated condition place the ply cords and the sidewall in compression. Due to the large amounts of rubber required to stiffen the sidewall members, heat build-up is a major factor in tire failure. This is especially true when the tire is operated for prolonged periods at high speeds in the uninflated condition. Pirelli discloses such a tire in EP-A- 475 258.

US-A- 5 368 082 describes the first run-flat tire of commercial significance. The tire was approved as equipment option for the 1994 Corvette automobile. The employment of special sidewall inserts improves stiffness. Approximately six additional pounds of weight per tire was required to support an 800 lb load in this uninflated tire. These run-flat tires had a very low aspect ratio. This earlier invention although superior to prior attempts still imposed a weight penalty per tire that could be offset by the elimination of a spare tire and the tire jack. This weight penalty was even more problematic when the engineers attempted to build higher aspect ratio tires for the large luxury touring sedans. The required supported weight for an uninflated luxury car tire approximates 1400 lbs load. These taller side-walled tires having aspect ratios in the 60% to 65% range means that the working loads were several times that of the earlier 40% aspect ratio run-flat Corvette type tires. Such loads meant that the sidewalls and overall tire had to be stiffened to the point of compromising ride. Luxury vehicle owners simply will not sacrifice ride quality for run-flat capability.

EP-A- 729 853 discloses a run-flat tire corresponding to the preamble of claim 1.

It is an object of this invention to provide a tire having an increased run-flat mileage as compared to prior art run-flat tires.

It is a further object of the invention to create a run-flat tire having limited increase in weight and almost no loss in ride or performance as compared to a conventional tire.

### Summary of the Invention

The invention provides a run-flat radial ply pneumatic tire, as defined in the appended claims.

Advantages provided by the invention are the ease of manufacturing on existing equipment, thanks to the lay up of the construction and the mechanical characteristics of the reinforcing hoop material.

Ride and handling performance in inflated conditions are improved and result from
- the use of reinforcing cords having low modulus at low elongations, as met in a tire with normal inflation pressure;
- the presence of the rubber insert on top of the textile or steel reinforced hoop which distributes the pressure on a significant part of the belt width; on small deformations this insert contributes to damping and softening of the road impacts and on large deformations it increases substantially the circumferential bending stiffness of the belt package;
- the use of thinner crescent shaped sidewall fillers due to the load carrying capacity of the hoop.

Tires with very stiff sidewalls can be very difficult to mount on rims. As the invention allows to make the sidewalls softer, tire mounting is facilitated.

### Brief Description of the Drawings

Figure 1 is a cross-sectional view of a prior art tire made in accordance with EP-A- 729 853.

Figure 2 is a cross-sectional view of a tire made in accordance with one embodiment of the present invention.

Figures 3-5 are cross-sectional views of different embodiments of the tire made in accordance with the present invention.

Figures 6 and 7 represent cross-sectional views of further embodiments of the tire made in accordance with the present invention wherein the hoop is not symmetrically located with respect to the equatorial plane of the tire.

### Definitions

"Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers, the hoop under the tread being encapsulated in tread rubber can be with or without other cord reinforced fabric elements.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, undertread, and sidewall rubber over the plies, but including the beads.

"Flipper" refers to narrow strips of cords reinforced material placed around the bead and bead filler.

"Cord" means one of the reinforcement strands of which the plies in the tire are comprised.

"Equatorial Plane (EP) means the plane perpendicular to the tire's axis of rotation and passing through the center of its tread.

"Footprint" means the contact patch or area of contact of the tire tread with a flat surface at zero speed and under normal load and pressure.

"Innerliner" means the layer or layers of elastomer or other material that form the inside surface of a tubeless tire and that contain the inflating fluid within the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Ply" means a continuous layer of rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tread Width" means the arc length of the tread surface in the axial direction, that is, in a plane parallel to the axis of rotation of the tire.

The term "Run-flat" as used in this patent means that the tire structure alone is sufficiently strong to support the vehicle load when the tire is operated in the uninflated condition, the sidewall and internal surfaces of the tire not collapsing or buckling onto themselves, without requiring any internal devices to prevent the tire from collapsing.

### Detailed Description of the Preferred Embodiment

Referring to Figure 1 there is illustrated a prior art run-flat tire 10 made in accordance with EP-A-729 853. The tire 10 has an annular tread 12, a pair of lateral tread edges 14,16, at least two reinforcing belts 36 located radially inwardly of the tread 12, a pair of sidewalls 18 extending radially inwardly from each lateral tread edge 14,16, a maximum section width (SW) and a tire carcass structure 30. The tire carcass structure 30 has at least two annular bead cores 26,26', at least a first 38 and preferably a second ply 40, an innerliner 35, at least a pair of first crescent shaped fillers 42 and bead fillers 43. The carcass structure 30, extends circumferentially about the tire from the first bead core 26 to the second bead core 26'. The tire's innerliner 35 is located radially inward of the first ply 38.

The first crescent shaped fillers 42 are located between the first ply 38 and the innerliner 35. The optional pair of second crescent shaped fillers 46 are located between the first ply 38 and the second ply 40. The second fillers 46 extend from a location radially inward of the radially outer end of each of the first and second bead fillers 43 radially outwardly beneath the reinforcing belts 36.

Coaxially with respect to the axis of rotation one additional bead core 37 is located radially inwardly of the reinforcing belts 36 and radially outwardly of the first and second bead cores 26,26'. The additional bead core 37 extends axially between the lateral tread edges 14,16, close to the equatorial plane EP.

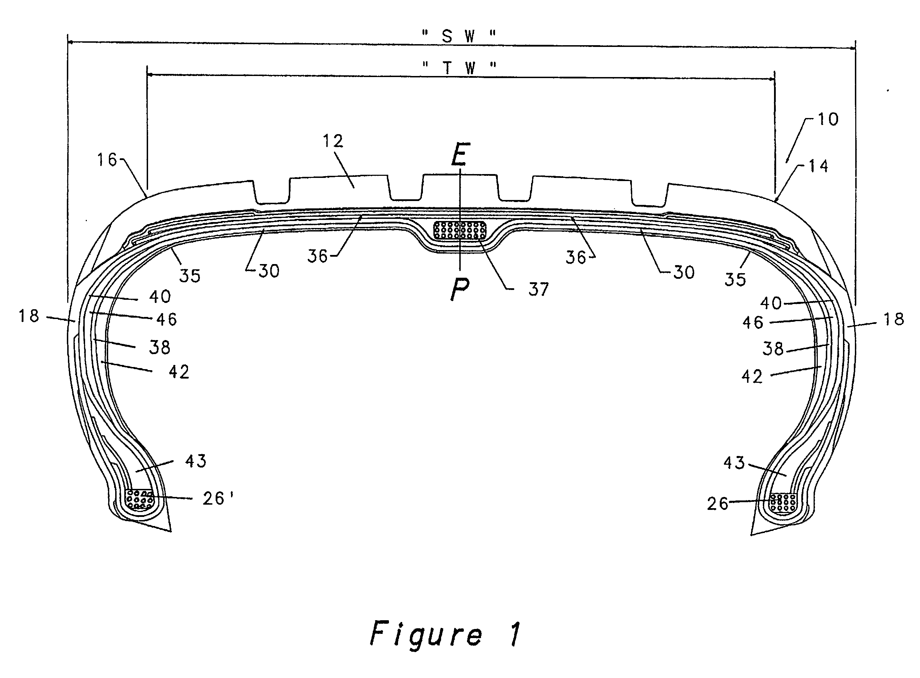

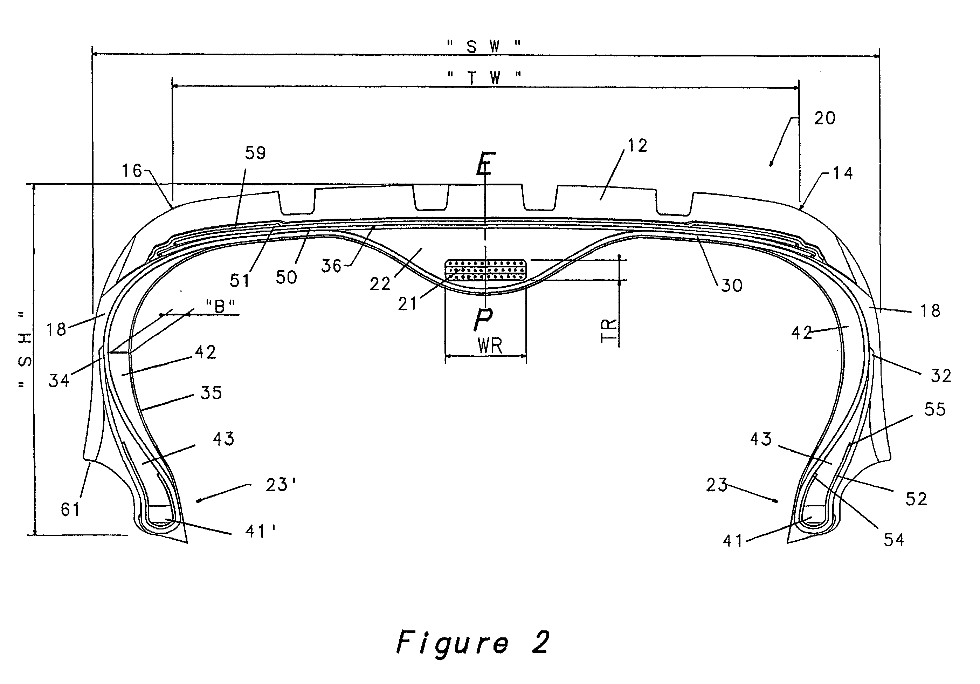

For purposes of this application and as far as appropriate, the various embodiments represented in the Figures 2 to 7 each use the same reference numerals for similar components.

The tire 20 as illustrated in Figure 2 is a passenger tire made according to a first embodiment of the invention. The tire 20 is provided with a ground-engaging tread portion 12, delimited by the lateral tread edges 14,16. Sidewall portions 18 extend from the lateral tread edges 14,16 respectively and terminate each in bead regions 23,23', each bead region having an annular inextensible bead core 41,41' respectively. Reference 61 denotes a rim-flange protector.

The tire 20 is further provided with a carcass structure 30 which extends from bead region 23 through first sidewall portion 18, tread portion 12, second sidewall portion 18, to bead region 23'. The turnup ends 32,34, of the carcass structure 30 are wrapped about bead cores 41,41', respectively and extend into the middle of the sidewalls 18 of the tire. The carcass structure 30 includes at least one reinforcing ply comprising one layer of parallel cords. The cords of this reinforcing ply are oriented at an angle of at least 75 degrees with respect to the equatorial plane of the tire 20. In the particular embodiment illustrated, the cords are oriented at an angle of about 90 degrees with respect to the equatorial plane. The cords may be made of any material normally used for cord reinforcement of rubber articles, for example, and not by way of limitation, steel cord, carbon fiber, rayon, nylon and polyester. In the particular embodiment illustrated, the cords are made from rayon.

The tire 20 may include a conventional innerliner 35 forming the inner peripheral surface of the tire, if the tire is to be of the tubeless type.

Placed circumferentially about the radially outer surface of the carcass structure 30, beneath the tread 12 is a tread reinforcing belt structure 36 comprising two single cut belt plies 50,51. The cords of the belt ply 50 are disposed in an opposite direction to the equatorial plane of the tire and from that of the cords of belt ply 51. In the represented embodiment the cords of the belt plies 50,51 are oriented at an angle of about 23 degrees with respect to the equatorial plane. It is to be understood that the belt structure 36 may comprise any number of belt plies of any desired configuration and the cords may be disposed at any desired angle.

As in the conventional high performance type tires, the tires according to the invention may enhance their high speed performance by the application of a fabric overlay layer 59 disposed about the tread reinforcing belt structure 36. For example, two ply layers having nylon or aramid cords may be disposed above the reinforcing belt structures 36, the lateral ends extending past the lateral ends of the belt structure. Alternatively, a single layer of a helically wound aramid reinforced ribbon can be employed as an overlay. The aramid material has a substantially higher modulus of elasticity than nylon and accordingly results in a stronger tire reinforcement than two layers of nylon.

Located within the bead region 23,23' and the radially inner portions of the sidewalls 18 are high modulus elastomeric bead fillers 43 disposed between the carcass structure 30 and the turnup ends 32,34 respectively. The bead fillers 43 extend from the radially outer portion of bead cores 41, 41' respectively, up into the sidewalls, gradually decreasing in cross-sectional width. In the particular embodiment illustrated, the bead fillers 43 each extend radially outward from the nominal rim diameter a distance of approximately 30mm (30%) of the maximum section height SH.

In a preferred embodiment of the invention the bead regions 23,23' further include at least one cord reinforced member 52, a so-called flipper, located around the bead and bead filler and having radially inner end 54 and radially outer end 55. In the illustrated embodiment, the cord reinforced member comprises only one component 52 extending up to 80% of the radial height of the bead filler 43 at its axially outer side and to about 35% of the radial height of the bead filler at its axially inner side. The cords of members 52 are preferably inclined, forming an included angle relative to the radial direction in a range from 25° to 75°, preferably 45°. Alternate possibility is to use a single or a double chipper as bead region reinforcement.

The sidewalls 18 are provided with elastomeric crescent shaped fillers 42. The fillers 42 are located between the innerliner 35 and the carcass structure 30. The fillers 42 extend from each bead region 23,23' radially to beneath the belt structure 36. The elastomeric fillers 42 have a maximum thickness B at a location approximately radially aligned with the maximum section width of the tire 20, the thickness B being about 15 percent of the maximum section height SH of the tire.

The overall cross-sectional thickness of the combination of elastomeric sidewall and bead fillers 42, 43, may be constant or increase from the bead cores 41,41' to the radial location of the maximum section width (SW) and thereafter decrease again up to the lateral edges of the belt structure 36.

In practice, the rubber compositions for the fillers and the ply coats utilized in this invention are preferably characterized by physical properties which enhance their utilization in runflat tires, as extensively described in above mentioned EP-A- 729 853. As taught therein, it is important that the rubber compositions for the bead and sidewall fillers 42,43 and the ply coats for one or more of the carcass plies have the properties of both relatively high stiffness and low hysteresis.

Substantially halfway between the tread edges 14,16, located between the carcass and the belt reinforcing structure are several turns of a steel cord reinforced layer constituting a reinforcing hoop 21. The hoop 21 is coupled with the belt structure 36 through a preferably trapezoidal rubber insert 22. The hoop 21 interacts with the portions of the belt reinforcing structure near the tread edges 14,16 and with the sidewall fillers 42 through the carcass reinforcing structure 30.

Because of the blow up of the green tire in the vulcanizing mold, advantage has been found in reinforcing the hoop with steel cords having constructions like 3x7, 3x8, 4x4, 4x2, 5x1, 2+7, 3+8, 3+9. Presently preferred steel cord construction is 3x7 X 0.175. The presently preferred steel grades are high elongation steels like HEC or similar. Such steel grades have a very low modulus (up to 10,000 MPa) in an elongation range up to 2%; for elongations exceeding 2% the steel grades reach quickly high moduli (50,000 to 210,000 MPa). Additional advantage of this type of cords is that they have excellent fatigue properties and can easily be processed and applied on a building drum. It appears that when going through the footprint of an inflated tire, the hoop cords are working in their low modulus-low elongation mode, with resulting good comfort and wear balance. The cords are working in their high modulus-high elongation mode when the tire is in deflated-deflected condition, contributing thereby markedly to run-flat mileage.

This hoop 21 should have a width WR comprised between 5 and 50% of the tread width TW and more preferably between 5 and 10 % of the treadwidth TW and a thickness TR comprised between 1 and 15 mm, more preferably between 2 and 6 mm. The hoop can be manufactured by winding a flat rubber strip, reinforced by the steel cords, and having the width of the hoop, several turns -e.g. three in Figure 2- on the carcass structure 30. The lateral cord density is preferably chosen to range from 6 to 28 EPI, most preferred being between 10 and 20 EPI. The inclination of the cords with respect to the equatorial plane of the tire may be comprised between 0 and 30 degrees, preferably between 0 and 5 degrees. If the inclination of the reinforcing cords with respect to the equatorial plane is zero degrees, the same steel cords extend through the different layers of the hoop and reinforce them. If the steel cords have a small inclination, their ends are cut on both lateral sides of the uncured rubber strip. The greater the inclination, the shorter the steel cords. Inclined cords allow for easier expansion of the reinforced strip during tire building and expansion of the tire into the curing mold.

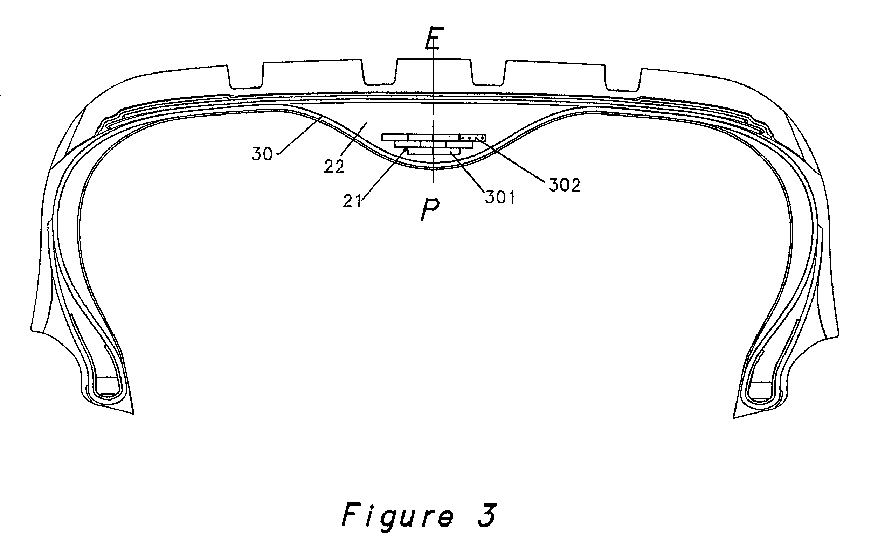

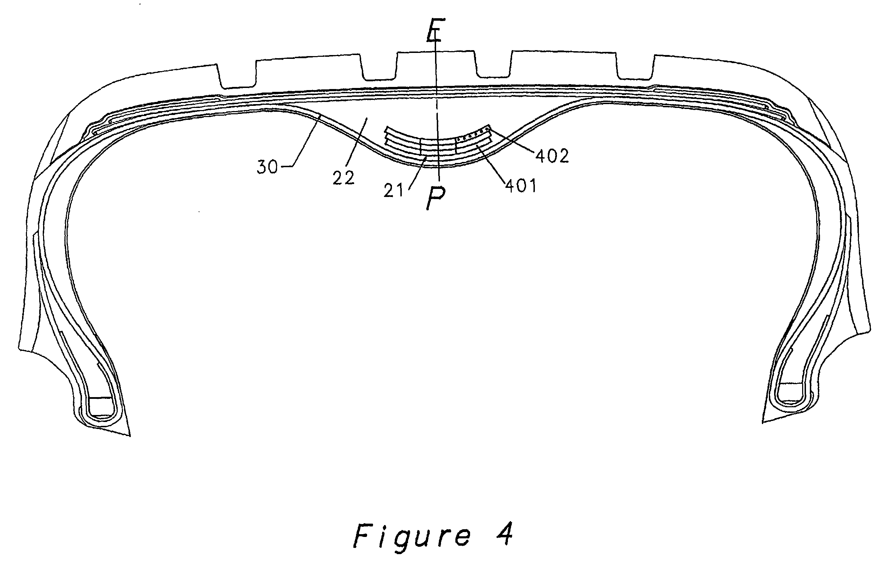

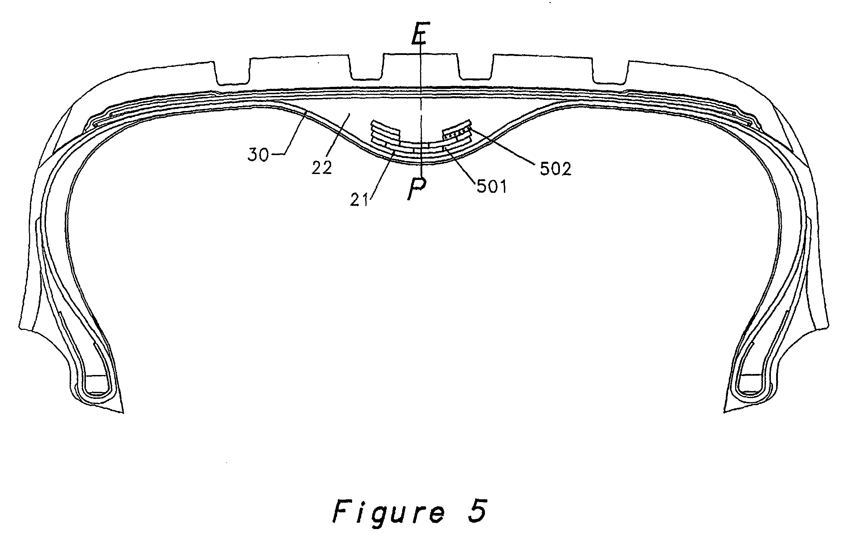

The hoop 21 can also be manufactured by winding a ribbon, having a width of 0.5 to 2 cm and reinforced by two or more steel cords, helically on the carcass structure 30. Such way to proceed allows to manufacture a hoop having a section which is not substantially rectangular. In Figures 3-5 several hoop sections are represented, whereby the reference x01 identifies the ribbon and the reference x02 the cord reinforcement, the letter x representing the Figure number; the cords x02 have only been represented in one ribbon section. The use of a ribbon allows to give the hoop e.g. a substantially trapezoidal (Figure 3), curved (Figure 4), U-shaped (Figure 5) or similar cross-section. It appears that the use of a ribbon allows to increase the density of the reinforcing cords at the location where they are most effective. Decreasing the width of the ribbon reduces productivity but is of benefit for tire uniformity.

Apart from the use of steel cord for reinforcing the hoop, it can be considered to use textile material such as nylon or polyester, preferably nylon or polyester monofilaments. In case of monofilaments such as 1260/2 Denier Nylon, the lateral spacing of the cords in the ribbon or in the strip is preferably comprised between 20 and 33 EPI.

As represented in Figure 2, the hoop 21 is located halfway between the two lateral tread edges 14, 16, so that the equatorial plane divides the hoop into two substantially equal halves. It may be of interest to have the hoop asymmetrically positioned with respect to the equatorial plane and more specifically this is the case for tires mounted on cars where the wheels have a marked camber. When such a tire loses its air, the first sidewall, which due to the camber is inclined towards the ground, tends to collapse or buckle onto itself, the second sidewall remaining in almost extended position. It appears that the major part of the weight of the car has to be absorbed by the collapsed first sidewall. The excessive deformation of the first sidewall results in high heat generation and early failure of the tire. Placing the hoop closer to the first sidewall will counteract this buckling tendency and will allow the hoop to work more efficiently and cooperate with the first sidewall in supporting the weight of the car. The distance the hoop has to be shifted out of symmetry with respect to the equatorial plane depends on the car suspension and is believed to be proportional to the amount of camber of the tire; this amount could range up to 50% of the treadwidth TW. In order to insure correct location of the hoop on the car, such hoop shifting should only be implemented in tires having asymmetric tread patterns.

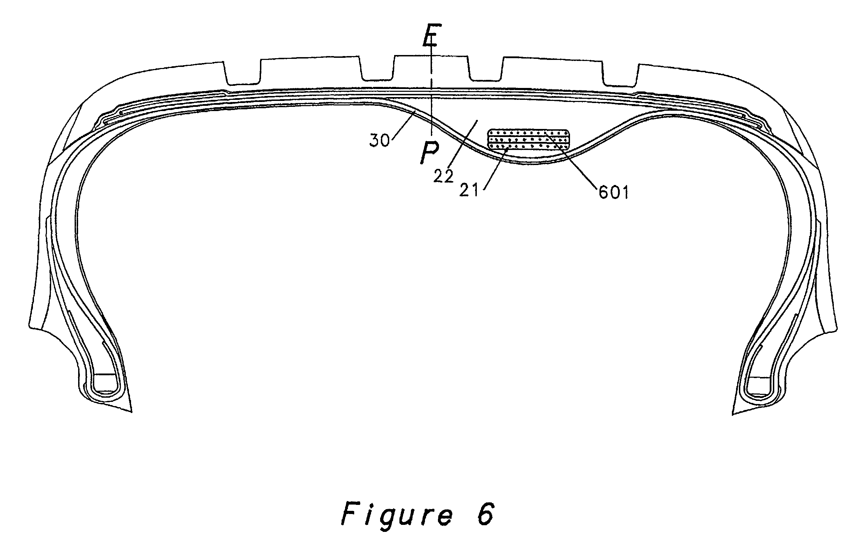

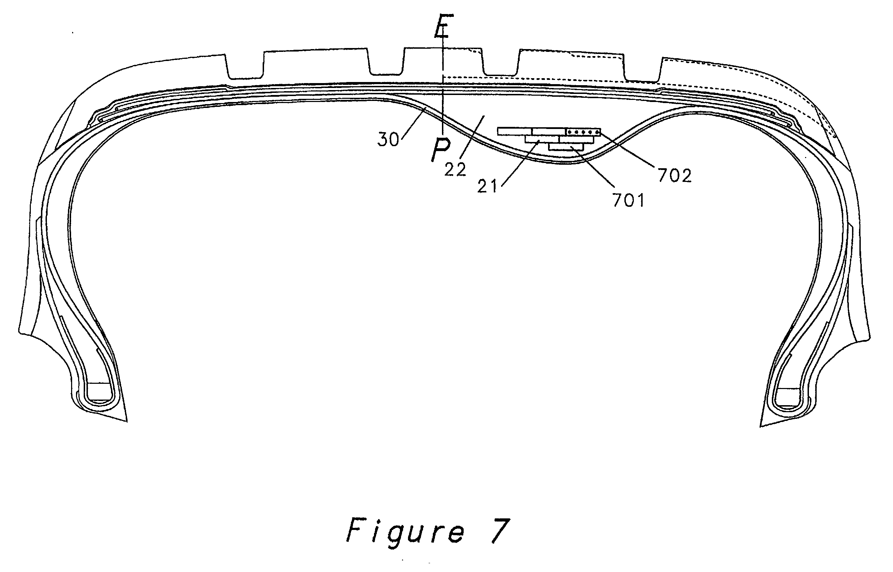

We refer now to Figures 6 and 7, where tire sections are represented, which have their hoops located asymmetrically with respect to the equatorial plane of the tire. In Figure 6 the hoop is obtained by winding an about 3 cm wide strip several turns around the carcass ply at a distance from the equatorial plane of about 7 cm. In Figure 7, ribbon 701 has been helically wound so that its radial thickness towards the closest sidewall is increased. An easy way to change the radial thickness of the hoop is either to decrease or to increase the lateral displacement speed of the ribbon, from the equatorial plane towards the shoulder of the tire, while winding the ribbon on the slowly rotating building drum. As explained above, having regard to Figure 3, the use of a ribbon allows to tailor the cord density to the reinforcement needs. In the present case the hoop has been given a roughly triangular cross-section.

The trapezoidal rubber insert 22 is made of a soft rubber compound, having a Shore A hardness comprised between 50 and 75 and more preferably between 56 and 65. Its gauge i.e. the radial thickness between the top of the hoop 21 and the bottom of the radially inner belt ply 50 is in the range of 3 to 35 mm, preferably from 5 to 20 mm, most preferred being about 10 mm. This rubber insert is also beneficial having regard to tire building aspects. It allows to apply the breakers in a conventional way, i.e. flat on the building drum on existing equipment. The rubber insert provides furthermore soft material, compensating a deficit of elongation of the hoop during the tire blow-up on the building drum and later in the tire vulcanizing mold. The gauge of the rubber insert combined with the cord elongation properties, is such that the tire is not stiffened in small deformations (deflection plus road unevenness) met in inflated tire condition, but is highly stiffened in deflated tire condition.

It appears that the belt structure 36, the rubber insert 22 and the hoop 21 constitute an arrangement which can be compared to, and works like a beam, whereby the belt structure forms the upper flange, the hoop the lower flange and the rubber insert the web.

When the tire has its normal inflation pressure, due to the hoop cords low modulus at low elongation, the strength of the lower flange constituted by the hoop is marginal and the beam like structure should more accurately be compared to a T-beam. This T-beam has a positive influence on tire comfort, because of its low circumferential bending stiffness; furthermore its presence allows to reduce the gauge of the sidewall fillers 42. The T-beam like structure is believed to have a positive influence on handling. The rubber insert also provides damping to the tire and does not contribute to tire stiffening for small deformations.

When the cords of the hoop enter the footprint of a tire in deflated condition, they work in their high modulus-high elongation mode. The hoop possesses consequently a high strength and the beam like structure has to be compared to an I-beam. The I-beam like structure cooperates with the rubber fillers 42 in the sidewalls and improves the contact with the road, resulting in better handling. The tire deflection is not limited to the zone around the footprint but distributed through the hoop on the entire tire structure. This is especially important, since the tire carcass portion located at 180 degrees from the footprint will be solicited in tension. For a tire having the size 195/65R15, the tire crown circumferential bending stiffness under large deflections, as met in run-flat mode, has been calculated to be 215 times larger for a tire as represented in Figure 2 than for a standard tire having no runflat properties. The circumferential bending stiffness of the tire as represented in Figure 2 has furthermore been calculated in inflated conditions as being 10 times smaller than for a tire built according to the prior art and having a third bead. The lower circumferential bending stiffness results in improved comfort and treadwear balance.

As illustrated in Figure 2, the carcass structure 30, has turnup ends 32,34 which wrap about the bead core 41 and 41' respectively and terminate in proximity to the radial location of the maximum section width of the tire 20. As the invention is more specifically directed to a tire crown reinforcement structure, the exact number of plies comprised in the carcass structure, the specific layout of the beads or the way the carcass is anchored in the beads is of limited importance. The carcass structure may comprise one or more cord reinforced plies wound, radially outwardly or radially inwardly, around the bead cores. The carcass structure may also comprise or consist of so-called floating plies, which extend from bead region to bead region 23, 23' but are not wrapped around the bead cores or the carcass structure may comprise plies which extend from the beads, wound around the bead cores or nor, up to the belt structure 36.

The annular tensile members or bead cores may have various shapes and layouts, such as for instance described in EP-A- 590 481, 288 986 or 281 859.

The invention is illustrated by the following presently preferred tire construction, as represented in Figure 2:

The carcass structure comprises one single ply reinforced by rayon. The ply is wrapped around the bead cores and the ply endings are located close to the maximum section width SW. The tire has in each sidewall one single, crescent shaped filler having an 8mm gauge. The bead regions comprise flippers reinforced with nylon cords. The hoop comprises 3 turns of a one inch (2,5 cm) wide strip, reinforced by 3x7x.20 high elongation steel cords, having a lateral density of 11 EPI. The rubber insert located at the equatorial plane, between the belt structure and the hoop, has a trapezoidal shape, with a 75 mm wide large base, a 30 mm wide narrow base and a 10 mm height.

The belt reinforcing structure comprises two single cut plies reinforced by 2x.30 steel cords having a lateral density of 20 EPI and one single helically wound spiral overlay reinforced with aramid cords.

The building drum used to build the tires had the usual cylindrical shape, well known by the man skilled in the art, with a groove in the middle of the drum. This groove had a shape adapted to receive the ribbon and the rubber insert, so that the drum had obtained again its cylindrical shape when the breakers were applied.

The only test results obtained with these tires up to now, were made in a laboratory and resulted in a runflat mileage of 2400 kms on a smooth wheel compared to 250-400 kms for prior art run-flat tires -i.e. without a hoop- in similar conditions. This mileage was obtained without camber of the tire. Under camber, it seems important to reduce the sidewall stiffness, because the tire according to the invention does not perform for small deformations. A stiff sidewall prevents the hoop from developing its own stiffness. Needless to repeat that a reduction in the thickness of the crescent shaped fillers improves comfort of the normally inflated tire and reduces its weight, cost, rolling resistance and improves its uniformity.

Though in the different embodiments represented in Figures 2-7, only one hoop has been included in the tire design, it lies within the scope of the invention to use more than one hoop. Such construction is especially of interest for very low aspect ratio tires. When e.g. two hoops are included in the tire design, they may be symmetrically or asymmetrically located with respect to the equatorial plane, depending on the camber of the tire once mounted on the car.

While certain representative embodiments and details have been shown for the purpose of illustrating the invention, it will be apparent to those skilled in this art that various changes and modifications may be made therein without departing from the scope of the claims.

## Claims

1. A run-flat radial ply pneumatic tire (20) having
- an annular tread (12) with lateral tread edges (14,16), a carcass (30), sidewalls (18) and a belt structure (36) located between the tread and the carcass;
- the carcass comprising, coaxially with respect to the axis of rotation, two annular beads (23,23') with at least one bead core (41,41') in each bead, and at least one cord reinforced radial ply extending from bead to bead;
- a pair of bead fillers (43), one bead filler located above each of the bead cores (41,41') and extending along the said cord reinforced radial ply into the sidewall (18);
- at least one crescent shaped filler (42) in each sidewall (18), located radially inwardly the at least one cord reinforced radial ply, the crescent shaped filler extending from a location radially inward of the radially outer end of the bead fillers (43) radially outwardly to beneath the belt structure (36); and
- a crown reinforcing structure located between the lateral tread edges (14,16), between the carcass and the belt structure (36) comprising at least one reinforcing hoop (21) neighboring the at least one cord reinforced radial ply, **characterized by** the hoop (21) being adjacent to a rubber insert (22) neighboring the belt structure (36) and having a height TR and a width WR at least 20% superior to its height TR, the rubber insert having a thickness of at least 3 mm and a width equaling at least the width WR of the hoop.

2. The run-flat radial ply pneumatic tire (20) of claim 1, wherein the hoop (21) has a width WR comprised between 5 and 40% of the tread width TW.

3. The run-flat radial ply pneumatic tire (20) of claim 1 or 2 wherein the hoop (21) is reinforced with cords having an inclination with respect to the equatorial plane comprised between 0 and 10 degrees.

4. The run-flat radial ply pneumatic tire (20) of any of claims 1-3 wherein the hoop (21) is reinforced with steel cords made of high elongation steels having a modulus up to at most 10,000 MPa in an elongation range up to 2%.

5. The run-flat radial ply pneumatic tire (20) of claim 4, wherein the hoop (21) is reinforced with UT steel cord chosen from the group consisting of 3x7x0.175, 3x7x0.20, 4x4, 4x2, 5X1, 3+9, 2+7.

6. The run-flat radial ply pneumatic tire (20) of claim 1, 2 or 3, wherein the hoop (21) is reinforced by textile cord material chosen from the group consisting of nylon, polyester, aramid and mixtures therefrom.

7. The run-flat radial ply pneumatic tire (20) of any of claims 1-6, wherein the hoop (21) has a substantially rectangular section and is obtained by winding circumferentially a cord reinforced rubber strip having the width WR of the hoop.

8. The run-flat radial ply pneumatic tire (20) of any of claims 1-6, wherein the hoop (21) is obtained by winding helically a ribbon reinforced by at least two cords.

9. The run-flat radial ply pneumatic tire (20) of claim 8 wherein the hoop (21) has a substantially trapezoidal section, the larger base of the trapezoid facing the belt reinforcing structure.

10. The run-flat radial ply pneumatic tire of any of claims 1-9, wherein the rubber insert (22) of the crown reinforcing structure has a Shore A hardness comprised between 50 and 75.

11. The run-flat radial ply pneumatic tire (20) of any of claims 1-10, wherein the rubber insert (22) has a thickness, as measured between the radially outer side of the hoop (21) and the radially inner ply of the belt reinforcing structure, ranging between 5 and 15 mm.

12. The run-flat radial ply pneumatic tire (20) of any of claims 1-11 having an innerliner (35) located radially inwardly of the radially inner cord reinforced radial ply, the sidewall (18) reinforcing fillers (42) being located between said radial ply and the innerliner.

13. The run-flat radial ply pneumatic tire (20) of any of claims 1-12 wherein the hoop (21) is spaced from the equatorial plane by a distance ranging between 0 and 30% of the treadwidth TW of the tire.

## Patentansprüche

1. Notlauf-Radialluftreifen (20) mit
- einem ringförmigen Laufstreifen (12), mit seitlichen Laufstreifenkanten (14, 16), einer Karkasse (30), Seitenwänden (18) und einer Gürtelstruktur (36), die zwischen dem Laufstreifen und der Karkasse angeordnet ist;
- wobei die Karkasse koaxial in Bezug auf die Drehachse zwei ringförmige Wülste (23, 23') mit mindestens einem Wulstkern (41, 41') in jedem Wulst und mindestens eine kordverstärkte radiale Lage, die sich von Wulst zu Wulst erstreckt, umfasst;
- zwei Wulstfülllagen (43), wobei eine Wulstfülllage über jedem der Wulstkerne (41, 41') angeordnet ist und sich entlang der kordverstärkten radialen Lage in die Seitenwand (18) hinein erstreckt;
- mindestens einer sichelförmigen Fülllage (42) in jeder Seitenwand (18), die radial innen in Bezug auf die mindestens eine kordverstärkte radiale Lage angeordnet ist, wobei sich die sichelförmige Fülllage von einer Stelle radial innen in Bezug auf das radial äußere Ende der Wulstfülllagen (43) radial nach außen bis unter die Gürtelstruktur (36) erstreckt; und
- eine Kronenverstärkungsstruktur, die zwischen den seitlichen Laufstreifenkanten (14, 16) zwischen der Karkasse und der Gürtelstruktur (36) angeordnet ist und mindestens einen Verstärkungsring (21) benachbart zu der mindestens einen kordverstärkten radialen Lage umfasst, **dadurch gekennzeichnet, dass** der Ring (21) an einen der Gürtelstruktur (36) benachbarten Gummieinsatz (22) angrenzt und eine Höhe (TR) und eine Breite (WR) aufweist, die mindestens 20 % größer als seine Höhe (TR) ist, wobei der Gummieinsatz eine Dicke von mindestens 3 mm und eine Breite, die mindestens gleich der Breite (WR) des Rings ist, aufweist.

2. Notlauf-Radialluftreifen (20) nach Anspruch 1, wobei der Ring (21) eine Breite (WR) aufweist, die zwischen 5 und 40 % der Laufstreifenbreite (TW) beträgt.

3. Notlauf-Radialluftreifen (20) nach Anspruch 1 oder 2, wobei der Ring (21) mit Korden verstärkt ist, die eine Schrägstellung in Bezug auf die Äquatorialebene aufweisen, die zwischen 0 und 10° beträgt.

4. Notlauf-Radialluftreifen (20) nach einem der Ansprüche 1 - 3, wobei der Ring (21) mit Stahlkorden verstärkt ist, die aus Stählen mit hoher Dehnung hergestellt sind, die einen Modul von bis zu höchstens 10000 MPa in einem Dehnungsbereich bis zu 2 % aufweisen.

5. Notlauf-Radialluftreifen (20) nach Anspruch 4, wobei der Ring (21) mit UT-Stahlkord verstärkt ist, der aus der Gruppe ausgewählt ist, die aus 3x7x0,175, 3x7x0,20, 4x4, 4x2, 5x1, 3+9, 2+7 besteht.

6. Notlauf-Radialluftreifen (20) nach Anspruch 1, 2 oder 3, wobei der Ring (21) mit Textilkordmaterial verstärkt ist, das aus der Gruppe ausgewählt ist, die aus Nylon, Polyester, Aramid und Mischungen davon besteht.

7. Notlauf-Radialluftreifen (20) nach einem der Ansprüche 1 - 6, wobei der Ring (21) einen im Wesentlichen rechteckigen Querschnitt aufweist und erhalten wird, indem in Umfangsrichtung ein kordverstärkter Gummistreifen mit der Breite (WR) des Rings gewickelt wird.

8. Notlauf-Radialluftreifen (20) nach einem der Ansprüche 1 - 6, wobei der Ring (21) erhalten wird, indem ein Band, das mit mindestens zwei Korden verstärkt ist, wendelförmig gewickelt wird.

9. Notlauf-Radialluftreifen (20) nach Anspruch 8, wobei der Ring (21) einen im Wesentlichen trapezförmigen Querschnitt aufweist, wobei die längere Grundlinie des Trapezes der Gürtelverstärkungsstruktur zugewandet ist.

10. Notlauf-Radialluftreifen nach einem der Ansprüche 1 - 9, wobei der Gummieinsatz (22) der Kronenverstärkungsstruktur eine Shore-A-Härte aufweist, die zwischen 50 und 75 beträgt.

11. Notlauf-Radialluftreifen (20) nach einem der Ansprüche 1 - 10, wobei der Gummieinsatz (22) eine Dicke, gemessen zwischen der radial äußeren Seite des Rings (21) und der radial inneren Lage der Gürtelverstärkungsstruktur, aufweist, die im Bereich zwischen 5 und 15 mm liegt.

12. Notlauf-Radialluftreifen (20) nach einem der Ansprüche 1 - 11, der einen Innerliner (35) aufweist, der radial innen in Bezug auf die radial innere, kordverstärkte, radiale Lage angeordnet ist, wobei die die Seitenwand (18) verstärkenden Fülllagen (42) zwischen der radialen Lage und dem Innerliner angeordnet sind.

13. Notlauf-Radialluftreifen (20) nach einem der Ansprüche 1 - 12, wobei der Ring (21) von der Äquatorialebene in einem Abstand angeordnet ist, der im Bereich zwischen 0 und 30 % der Laufstreifenbreite (TW) des Reifens liegt.

## Revendications

1. Bandage pneumatique (20) à nappe radiale permettant de rouler à plat comportant
- une bande de roulement annulaire (12) comprenant des bords latéraux de bande de roulement (14, 16), une carcasse (30), des flancs (18), et une structure de ceintures (36) disposée entre la bande de roulement et la carcasse ;
- la carcasse comprenant, en position coaxiale par rapport à l'axe de rotation, des talons annulaires (23, 23') comprenant au moins une tringle de talon (41, 41') dans chaque talon, et au moins une nappe radiale renforcée par des câblés, s'étendant d'un talon à l'autre ;
- une paire de bourrages sur tringles (43), un bourrage sur tringle étant disposé par-dessus chacune des tringles de talons (41, 41') et s'étendant le long de ladite nappe radiale renforcée avec des câblés jusque dans le flanc (18) ;
- au moins une matière de charge (42) en forme de croissant dans chaque flanc (18), disposée en position radiale vers l'intérieur de ladite ou desdites nappes radiales renforcées avec des câblés, la matière de charge en forme de croissant s'étendant depuis un endroit situé en direction radiale à l'intérieur de l'extrémité externe en direction radiale des bourrages sur tringles (43) en position radiale vers l'extérieur jusqu'à un endroit situé en dessous de la structure de ceintures (36) ; et
- une structure de renforcement de la couronne disposée entre les bords latéraux de la bande de roulement (14, 16), entre la carcasse et la structure de ceintures (36), comprenant au moins un cercle de renforcement (21) avoisinant ladite ou lesdites nappes radiales renforcées avec des câblés, **caractérisé par le fait que** le cercle (21) est disposé en position adjacente à une pièce rapportée en caoutchouc (22) avoisinant la structure de ceintures (36), qui possède une hauteur TR et une largeur WR supérieure à sa hauteur TR à concurrence d'au moins 20 %, la pièce rapportée en caoutchouc possédant une épaisseur d'au moins 3 mm et une largeur qui est égale à au moins la largeur WR du cercle.

2. Bandage pneumatique à nappe radiale (20) permettant de rouler à plat selon la revendication 1, dans lequel le cercle (21) possède une largeur WR comprise entre 5 et 40 % de la largeur de bande de roulement TW.

3. Bandage pneumatique à nappe radiale (20) permettant de rouler à plat selon la revendication 1 ou 2, dans lequel le cercle (21) est renforcé avec des câblés dont l'inclinaison par rapport au plan équatorial EP comprise entre 0 et 10 degrés.

4. Bandage pneumatique à nappe radiale (20) permettant de rouler à plat selon l'une quelconque des revendications 1 à 3, dans lequel le cercle (21) est renforcé avec des câblés en acier réalisés en acier à allongement élevé possédant un module s'élevant au maximum jusqu'à 10.000 MPa dans une plage d'allongement s'élevant jusqu'à 2 %.

5. Bandage pneumatique à nappe radiale (20) permettant de rouler à plat selon la revendication 4, dans lequel le cercle (21) est renforcé avec des câblés en acier UT choisis parmi le groupe constitué par 3x7x0,175, 3x7x0,20, 4x4, 4x2, 5x1, 3+9, 2+7.

6. Bandage pneumatique à nappe radiale (20) permettant de rouler à plat selon la revendication 1, 2 ou 3, dans lequel le cercle (21) est renforcé avec une matière de câblé en textile, choisi parmi le groupe constitué par le nylon, le polyester, l'aramide et leurs mélanges.

7. Bandage pneumatique à nappe radiale (20) permettant de rouler à plat selon l'une quelconque des revendications 1 à 6, dans lequel le cercle (21) possède une section essentiellement rectangulaire et est obtenu en enroulant en direction circonférentielle une bande de caoutchouc renforcé avec des câblés possédant la largeur WR du cercle.

8. Bandage pneumatique à nappe radiale (20) permettant de rouler à plat selon l'une quelconque des revendications 1 à 6, dans lequel le cercle (21) est obtenu en enroulant de manière hélicoïdale un ruban renforcé par au moins deux câblés.

9. Bandage pneumatique à nappe radiale (20) permettant de rouler à plat selon la revendication 8, dans lequel le cercle (21) possède essentiellement une section trapézoïdale, la grande base du trapèze étant opposée à la structure de renforcement de ceintures.

10. Bandage pneumatique à nappe radiale (20) permettant de rouler à plat selon l'une quelconque des revendications 1 à 3, dans lequel la pièce rapportée en caoutchouc (22) de la structure de renforcement de la couronne possède une dureté Shore A comprise entre 50 et 75.

11. Bandage pneumatique à nappe radiale (20) permettant de rouler à plat selon l'une quelconque des revendications 1 à 10, dans lequel la pièce rapportée en caoutchouc (22) possède une épaisseur, telle qu'on la mesure entre le côté externe du cercle (21) en direction radiale et la nappe interne de la structure de renforcement de ceintures en direction radiale, qui se situe dans la plage entre 5 et 15 mm.

12. Bandage pneumatique à nappe radiale (20) permettant de rouler à plat selon l'une quelconque des revendications 1 à 11, possédant un calandrage intérieur 35 disposé en position radiale à l'intérieur de la nappe de carcasse interne en direction radiale renforcée par des câblés, les matières de charge (42) renforçant le flanc (18) étant disposées entre ladite nappe radiale et le calandrage intérieur.

13. Bandage pneumatique à nappe radiale (20) permettant de rouler à plat selon l'une quelconque des revendications 1 à 12, dans lequel le cercle (21) est espacé du plan équatorial sur une distance qui se situe dans la plage entre 0 et 30 % de la largeur de bande de roulement TW du bandage pneumatique.
